(19) Europäisches Patentamt

European Patent Office

Office européen des brevets

(11) **EP 3 896 110 A1**

(12) **EUROPEAN PATENT APPLICATION**

(43) Date of publication:
**20.10.2021 Bulletin 2021/42**

(51) Int Cl.:
**C08G 18/79** (2006.01)     **C08G 18/75** (2006.01)
**C08G 18/78** (2006.01)     **A62B 17/00** (2006.01)
**C08G 18/72** (2006.01)

(21) Application number: **20169347.0**

(22) Date of filing: **14.04.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Covestro Deutschland AG
51373 Leverkusen (DE)**

(72) Inventors:
• **BOEHNKE, Lutz
51491 Overath (DE)**

• **KUSAN-BINDELS, Jacqueline
51375 Leverkusen (DE)**
• **STERN, Frank-Stefan
51427 Bergisch Gladbach (DE)**
• **BITTNER, Natalie
50226 Frechen (DE)**

(74) Representative: **Davepon, Björn
Patentanwaltskanzlei Davepon
Schloss Dyck
41363 Jüchen (DE)**

(54) **COMPOSITE ARTICLE COMPRISING A TEXTILE LAYER AND A FOAM LAYER**

(57)     The present invention relates to a composite article comprising a textile layer and a foam layer disposed on the textile layer. The invention further relates to methods for manufacturing such an article. Depending on the filtering and air flowability requirements, the foam layer comprises either a normally produced open cellular foam or a foam which has also been recticulated in order to increase further the air flowability with a fluid connection between one major surface and another, opposing major surface of the foam layer; the textile layer and/or the foam layer comprise an antimicrobial agent and/or an antiviral agent and the foam layer comprises a foam which has been obtained by reacting a composition which comprises the following components: a. an isocyanate mixture comprising: a1) an aliphatic and/or alicyclic and/or aromatic isocyanate monomer and/or uretdione, and a2) an aliphatic and/or alicyclic and/or aromatic isocyanate oligomeric polyisocyanate, an isocyanurate containing polyisocyante preferably (trimers and higher oligomers), wherein the mass ratio of said monomer and/or uretdione to said oligomeric polyisocyanate is ≤ 200:1 in cases the isocyanate mixture comprises as component a1) aliphatic and/or alicyclic isocyanate monomers and/or uretdiones, based on aliphatic and/or alicyclic isocyanate monomers, and as component a2) oligomeric aliphatic and/or oligomeric alicyclic polyisocyanates, ≥ 200:1 in cases the isocyanate mixture comprises as component a1) aromatic isocyanate monomers and/or uretdiones, based on aromatic isocyanate monomers, and as component a2) oligomeric aromatic polyisocyanates; b. a polymer polyol mixture comprising: b1) a first polyether polyol having a number average molecular weight of not less than 3000 g/mol with an ethylene oxide content of 5-20 wt.%, b2) a second polyether polyol having a number average molecular weight of not less than 3000 g/mol with an ethylene oxide content of more than 60 wt.%, wherein the mass ratio of said first polyether polyol to said second polyether polyol is in a range of 4:1-100:1; c. an isocyanate-reactive group comprising compound having a number average molecular weight of 32-600 g/mol; d. a catalyst; e. a foaming agent; and f. optionally, an additive; wherein said composition has an isocyanate index of 70-120.

# Description

The present invention relates to a composite article comprising a textile layer and a foam layer disposed on the textile layer. The invention further relates to methods for manufacturing such an article.

## Background of the Art

Flexible foams, especially flexible polyurethane foams, are often used in the field such as textiles. Flexible polyurethane foams are generally prepared by reacting isocyanates with isocyanate-reactive compounds comprising at least two active hydrogen atoms in the presence of a foaming agent, a catalyst, a siloxane-based surfactant and other additives, wherein the isocyanate-reactive compounds comprising active hydrogen atoms are generally polyols, primary polyamines, secondary polyamines, and water.

EP 3 611 203 A1 discloses a composition for preparing flexible foams and the application thereof. Applications include a pillow, a back cushion, a garment pad, or a vamp. The composition comprises the following components: a. an isocyanate mixture comprising: a1) an aliphatic and/or alicyclic isocyanate monomer, and a2) an aliphatic and/or alicyclic isocyanate trimer, wherein the mass ratio of said monomer to said trimer is in a range of 3:1-200:1; b. a polymer polyol mixture comprising: b1) a first polyether polyol having a number average molecular weight of not less than 3000 g/mol with an ethylene oxide content of 5-20 wt.%, b2) a second polyether polyol having a number average molecular weight of not less than 3000 g/mol with an ethylene oxide content of more than 60 wt.%, wherein the mass ratio of said first polyether polyol to said second polyether polyol is in a range of 4:1-100:1; c. an isocyanate-reactive group comprising compound having a number average molecular weight of 32-400 g/mol; d. a catalyst; e. a foaming agent; and f. optionally, an additive; wherein said composition has an isocyanate index of 70-120.

EP 1 721 720 A1 relates to a method for the preparation of polyurethane foam materials suited for seamless breast pads, cups, fronts and the like for use in brassieres and other garments. Polyurethane foam is produced from aliphatic isocyanates and polyols. The aliphatic polyurethane foam is reticulated to remove all celled membranes and sliced into a sheet with a thickness greater than the thicker wall of the finished brassiere cup. The sliced aliphatic polyurethane foam sheet is then pressed between mold parts of a female mold part and a male mold part. The mold parts are closed and pressed whereby the aliphatic polyurethane foam material is molded into the exact shape of the mold cavity. The molded aliphatic polyurethane foam material can be used as seamless breast pads, cups, fronts and the like in brassieres and other garments and expresses superior non-yellowing properties over previous aromatic polyurethane brassiere pads and improved breathability and porosity.

JP 2018016904 A concerns itself with the problem of providing a virus removing filter having sufficient breathability, having virus removing performances and being excellent as a mask member. A virus removing filter comprises: a first base material composed of an open-cell foam sheet; an intermediate fiber layer composed of a nanofiber formed on one surface of the first base material; and a second base material composed of an open-cell foam sheet superposed on the intermediate fiber layer. The open-cell foam sheets of the first base material and the second base material are defined as a skinned soft slab polyurethane foam sheet, and the nanofiber of the intermediate fiber layer is defined as a polyurethane.

## Summary of the invention

The object of the present invention is to provide an article which is suitable for use in breathing masks and which is durable, light weight and therefore comfortable to wear and which increases the protection of the wearer from aerosols, fine particulate matter, pathogens i.e. bacteria and viruses. The article preferably forms that part of the breathing mask which covers the nose and/or mouth of the user. Advantageously, the article may be washed, even at temperatures up to 90 °C providing the possibility to destroy pathogens. Due to this property it may be used several times so that the amount of waste generated is decreased as compared to masks which are intended for a single use.

This object is achieved by an article according to claim 1. Methods for the production of such an article are the subject of claims 14 and 15. Preferred embodiments are the subject of the dependent claims. Embodiments discussed in the description and the claims can be combined freely unless the context clearly indicates otherwise.

Accordingly, a composite article comprising a textile layer and a foam layer disposed on the textile layer is provided wherein:

depending on the filtering and air flowability requirements, the foam layer comprises either a normally produced open cellular foam or a foam which has also been reticulated in order to further increase the air flowability with a fluid connection between one major surface and another, opposing major surface of the foam layer;

the textile layer and/or the foam layer comprise an antimicrobial agent and/or an antiviral agent,

the foam layer comprises a foam which has been obtained by reacting a composition which comprises the following components:

a. an isocyanate mixture, comprising:

a1) an aliphatic and/or alicyclic and/or aromatic isocyanate monomer and/or an uretdione, based on an aliphatic and/or alicyclic and/or aromatic isocyanate monomer, and

a2) an oligomeric aliphatic and/or oligomeric alicyclic and/or oligomeric aromatic polyisocyanate,

wherein the mass ratio of said isocyanate monomers and/or uretdiones to said oligomeric polyisocyanates is

≤ 200:1, preferably 200:1 - 1:500, more preferably 20:1 - 1:120, most preferably 3:1 - 1:30 in cases the isocyanate mixture comprises as component a1) aliphatic and/or alicyclic isocyanate monomers and/or uretdiones, based on aliphatic and/or alicyclic isocyanate monomers, and as component a2) oligomeric aliphatic and/or oligomeric alicyclic polyisocyanates,

≥ 200:1, preferably 500:1 - 1:200, more preferably 120:1 - 1:20, most preferably 30:1 - 1:3 in cases the isocyanate mixture comprises as component a1) aromatic isocyanate monomers and/or uretdiones, based on aromatic isocyanate monomers, and as component a2) oligomeric aromatic polyisocyanates;

b. a polymer polyol mixture, comprising:

b1) a first polyether polyol having a number average molecular weight of not less than 3000 g/mol, wherein said first polyether polyol is obtained by the polymerization of a component comprising ethylene oxide, and said first polyether polyol has an ethylene oxide content of 5-20 wt.%, based on the amount of the component for preparing said first polyether polyol as 100 wt.%,

b2) a second polyether polyol having a number average molecular weight of not less than 3000 g/mol, wherein said second polyether polyol is obtained by the polymerization of a component comprising ethylene oxide, and said second polyether polyol has an ethylene oxide content of more than 60 wt.%, based on the amount of the component for preparing said second polyether polyol as 100 wt.%, and

b3). optionally, a third polyether polyol having a number average molecular weight of not less than 500 g/mol,

b4) optionally, a fourth oligomeric polyester polyol, having an average molecular weight of not less than 350 g/mol

wherein the mass ratio of said first polyether polyol to said second polyether polyol is in a range of 4:1-100:1, and the amount of said third polyether polyol is not more than 20 wt.%, based on the amount of said polymer polyol mixture as 100 wt.%;

c. an isocyanate-reactive group comprising compound having a number average molecular weight of 32-600 g/mol;
d. a catalyst;
e. optionally, a foaming agent; and
f. optionally, an additive;

wherein the isocyanate index of said composition is in a range of 70-120.

Moreover, the present invention provides a method of manufacturing an article according to the invention includes that a textile layer and a pre-fabricated foam layer are placed into a mold and thermoformed together.

Moreover, the present invention provides another method of manufacturing an article according to the invention includes that the composition as recited herein is frothed into a foam and contacted with the textile layer under subsequent curing to obtain a foam layer bonded to the textile layer.

Moreover, the present invention provides a further method of manufacturing an article according to the invention includes that the composition as recited herein is that the textile layer is glued with the pre-fabricated foam layer, preferably in the edge region.

The foam of the foam layer is a non-yellowing flexible polyurethane foam, which enables satisfying the comprehensive requirements of the textile industry for high resilience, good breathability, washing resistance, good tensile strength, high ductility, tunable hardness and hand feel of the foam, is obtained by the reaction of the composition. Details of its manufacture and its properties can be found in EP 3 611 203 A1.

**Detailed Description**

The reticulated open-cell foam of the foam layer may be manufactured by crushing the foam. It is a particular advantage of the foam used in the article according to the invention that it is not friable to an extent that polyurethane particles are released which would then be inhaled.

The major surfaces of a layer in the context of the present invention are the two largest surfaces. Usually the foam layer and the textile layer are simply arranged on top of each other. In the foam layer there is a fluid connection between one major surface and another major surface. This is effected by the structure of the foam and leads to the foam layer being breathable. Foams with a reticulate open cell structure are especially preferred due to their good breathability. The textile layer is breathable as well owing to it being a textile.

Besides by the physical filtering function of the foam layer, a person is further protected by antimicrobial agents and/or antiviral agents. They may be located in the foam layer, on a foam layer surface, embedded in the textile layer, on a textile layer surface or a combination of these locations.

According to one embodiment the article is a breathing mask. This includes surgical masks and masks as part of a personal protection equipment (PPE) system. Preferably, the breathing mask satisfies the standard FFP3 according to DIN-EN 149.

According to another embodiment the textile layer comprises a non-woven textile.

According to another embodiment the foam layer has a thickness of $\geq$ 1 mm to $\leq$ 10 mm, more preferably $\geq$ 1 mm to $\leq$ 5 mm and even more preferably $\geq$ 1 mm to $\leq$ 3 mm. It has been surprisingly found in the study underlying the present invention that the above-defined foams meet the breathability requirements of standard FFP3 according to DIN-EN 149 even at a thickness of as much as 20 mm or 25 mm. Thus, it is possible to use trimers based on HDI and/or PDI which lead to a decreased pore size and, thus, even better protection while still meeting the requirements of DEN-EN-149.

According to another embodiment the antimicrobial agent and/or antiviral agent are selected from metallic silver, silver alloys, silver compounds, bonded copper nano particles, copper compounds, titanium dioxide, organometallic compounds or a mixture of at least two of the aforementioned agents.

According to another embodiment the textile layer and the foam layer are at least partially chemically, mechanically or thermally bonded to each other. Chemical bonding may occur with the aid of an adhesive or via the adhesive properties of the foam reaction mixture. Mechanical bonding is preferably achieved by sewing the layers.

According to another embodiment the foam layer has an average pore size of $\geq$ 150 $\mu$m to 1500 $\leq$ y $\mu$m, determined according to the following method:

### Cell size analysis

The foam samples are cut into thin slices, the cut surface (which is parallel to the foam rise direction) is colored for example with a broad black marker (such as an Edding 390), so that only the first layer of foam cells is colored. Afterwards the cut surface is scanned with a flatbed scanner (Epson Perfection V370 Photo) with a scanning resolution of 4800 dpi. The scan image is then analyzed with the software Image J. An area is selected to be analyzed; this should be large enough to contain 500 to 1000 cells. Then the diameter of 5 cells is measured to get a tolerance value for a later step of the analysis. The picture is then binarized into a black and white image to get only the first cell layer. To reconstruct the cells the software first uses the "Exact Signed Euclidian Distance Transformation" (EDT) algorithm. For the following morphological segmentation the tolerance value is needed. The morphological segmentation is performed via a watershed method, with the tolerance value influencing the amount of cells found. The tolerance value must fit the cell size otherwise too many artificial cells are found if the tolerance value is too low, or too few cells are found resulting in a larger cell size than the actual one if the tolerance value is too high. Afterwards the quality of the reconstruction must be evaluated to confirm that the tolerance value and the reconstructed cells fit the actual imaged cells. This last step can be repeated until the chosen tolerance value and the reconstruction fit the image. Afterwards the reconstructed cells can be analyzed concerning their size and shape. One output of the analysis by the software is the cell area (A), which is used to calculate the equivalent circle diameter (ECD). The ECD is the diameter of a circle with the same area as the actual analyzed cell and is used to quantify the cell size. It can be calculated by the following formula:

$$ECD[\mu m] = 2000 \cdot \sqrt{\frac{A[mm]}{\pi}}$$

Form the obtained values for all analyzed cells the mean ECD is calculated.

The cell size analysis was performed for three different foam samples and the mean calculated and noted as cell size.

According to another embodiment the foam layer has an air flow rate, determined according to DIN-EN-ISO 7231, of $\geq$ 40 L/min.

According to another embodiment the foam layer has a raw density, determined according to DIN EN ISO 845, of $\geq$ 20 kg/m$^3$ to $\leq$ 120 kg/m$^3$.

According to another embodiment the article further comprises a replaceable moisture-absorbent layer. Examples include a cellulose layer, a cotton layer and a superabsorber (ionically cross-linked polymethyl(meth)acrylate) layer. The replaceable layer can easily be exchanged once it has become too moist for further comfort of the wearer. This increases the durability of the article, in particular in the form of a breathing mask, as a whole and improves the airflow through the article.

The composition from whose reaction the foam has been obtained will be described in greater detail in the following sections.

### Isocyanate mixture

The isocyanate group content in said isocyanate mixture may be in a range of 20-54 wt.%, based on the amount of said isocyanate mixture as 100 wt.%.

The isocyanate group content in said isocyanate mixture is preferably in a range of 20-37.5 wt.%, based on the amount of said isocyanate mixture as 100 wt.%.

The mass ratio of said isocyanate monomers and/or uretdiones to said oligomeric polyisocyanates is $\leq$ 200:1, preferably 200:1 - 1:500, more preferably 20:1 - 1:120, most preferably 3:1 - 1:30 in cases the isocyanate mixture comprises as component a1) aliphatic and/or alicyclic isocyanate monomers and/or uretdiones, based on aliphatic and/or alicyclic isocyanate monomers, and as component a2) oligomeric aliphatic and/or oligomeric alicyclic polyisocyanates,

≥ 200:1, preferably 500:1 - 1:200, more preferably 120:1 - 1:20, most preferably 30:1 - 1:3 in cases the isocyanate mixture comprises as component a1) aromatic isocyanate monomers and/or uretdiones, based on aromatic isocyanate monomers, and as component a2) oligomeric aromatic polyisocyanates.

The range ≤ 200:1 comprises foams, which are based on very high proportions of oligomeric polyisocyanates, up to foams which are based on pure oligomeric polyisocyanates.

The range ≥ 200:1 comprises foams, which are based on very high proportions of isocyanate monomers and/or uretdiones, up to foams which are based on pure isocyanate monomers and/or uretdiones.

Isocyanate monomers and uretdiones

Component a1) refers to the sum of all monomeric isocyanates as well as uretdiones comprised by the reaction mixture.

Monomeric isocyanates are molecules having at least one isocyanate group and which are not products of the reaction of two or more isocyanate molecules with each other.

The term "uretdione" refers to an oligomeric polyisocyanate comprising at least two monomeric isocyanates which are linked by at least one uretdione structure.

The average isocyanate functionality of all isocyanate monomers and uretdiones comprised by component a1) is preferably 2.

Uretdiones based on monomeric diisocyanates with an isocyanate functionality of 2 also have an isocyanate functionality of 2. They are, thus functional equivalents to monomeric diisocyanates. As uretdiones are less volatile than monomeric diisocyanates they are safer to use.

Therefore, in a preferred embodiment of the present invention based on its total weight component a1) comprises at least 99.5 wt.% uretdiones based on monomeric diisocyanates.

The isocyanate group content in said isocyanate monomer is preferably in a range of 20-40 wt.%, based on the amount of said isocyanate monomer as 100 wt.%.

Said aliphatic isocyanate monomer is preferably one or more selected from the group consisting of: hexamethylene diisocyanate (HDI), 2,2-dimethyl pentamethylene diisocyanate, 2,2,4-trimethylhexamethylene diisocyanate, butylene diisocyanate, 1,3-butadiene-1,4-diisocyanate, 2,4,4-trimethyl-1,6-hexamethylene diisocyanate and lysine methyl ester diisocyanate.

Said alicyclic isocyanate monomer is preferably one or more selected from the group consisting of: isophorone diisocyanate (IPDI), isomeric bis(4,4'-isocyanatocyclohexyl)methane or their mixtures with any isomer content, 1,4-cyclohexylidene diisocyanate, norbornane diisocyanate (NBDI), hydrogenated xylylene diisocyanate ($H_6$XDI), 1,4-cyclohexylene diisocyanate ($H_6$PPDI), 1,5-pentamethylene diisocyanate (PDI) and dicyclohexylmethane diisocyanate ($H_{12}$MDI).

Said aromatic isocyanate monomer is preferably one or more selected from the group consisting of: 1,5-naphthalene-diisocyanate (NDI), 1,3-bis(isocyanatomethyl)benzene (XDI), 1,3- and/or 1,4-bis(2-isocyanatoprop-2-yl)-benzene (TMXDI), 2,2', 2,4' and 2,6'-methylene diphenyl diisocyanate, 2,4 and 2,6 toluene diisocyanate.

Said isocyanate monomer is preferably an aliphatic or alicyclic isocyanate, further preferably an alicyclic isocyanate, more preferably an isophorone diisocyanate and/or dicyclohexylmethane diisocyanate, and most preferably isophorone diisocyanate.

Oligomeric Polyisocyanate

Component a2) refers to the sum of all oligomeric isocyanates comprised by the reaction mixture.

The term "oligomeric polyisocyanate" refers to a polyisocyanate formed from at least two monomeric diisocyanate molecules, i.e. it relates to compounds that constitute or contain a reaction product formed from at least two monomeric diisocyanate molecules. Oligomeric polyisocyanates suitable for use in the present invention have an average isocyanate functionality of at least two NCO groups per molecule.

It is preferred that all oligomeric polyisocyanates comprised by component a2) have an average isocyanate functionality of 2.5 to 5.0, more preferably of 2.8 to 4.5 isocyanate groups per molecule, as the use oligomeric of polyisocyanates with higher functionality decreases the pore size of the foam, thus improving the retention of particles.

Preferred oligomeric polyisocyanates comprise at least one structure selected from the group consisting of isocyanurate, allophanate, biuret, iminooxadiazinedione and oxadiazinetrione structures.

All monomeric diisocyanates disclosed above as suitable monomeric polyisocyanates in component a1) may be used for making the oligomeric polyisocyanates suitable as component a2). However, preferred monomeric diisocyanates for making the oligomeric polyisocyanate used as component a2) are aliphatic and/or alicyclic monomeric diisocyanates, more preferred they are selected from the group consisting of isophorone diisocyanate (IPDI), 1,5-pentamethylene diisocyanate (PDI) and hexamethylene diisocyanate (HDI).

The viscosity of said oligomeric polyisocyanate is preferably in a range of 1000-10000 mPa·s, as measured at 23°C. It is preferred to use a DV-II+Pro. rotational viscometer available from Brookfield Company and to perform the measurement according to DIN 53019.

The isocyanate group content in said oligomeric polyisocyanate is preferably in a range of 20-25 wt.%, based on the amount of said oligomeric polyisocyanate as 100 wt.%.

It is preferred to use a component a2) comprising at least 80 wt.% - based on its total weight - oligomeric polyisocyanates with a content of isocyanurate structures of at least 50 mol-%, more preferably at least 70 mol-%, based on the sum of uretdione, isocyanurate, allophanate, biuret, iminooxadiazinedione and oxadiazinetrione structures in the polyisocyanate.

Moreover, it is preferred to use a component a2) which comprises - based on its total weight - at least 80 wt.% HDI, IPDI or a mixture of HDI and IPDI.

It is particularly preferred to use a component a2) comprising at least 80 wt.% - based on its total weight - oligomeric polyisocyanates with a content of isocyanurate structures of at least 50 mol-%, more preferably at least 70 mol-%, based on the sum of uretdione, isocyanurate, allophanate, biuret, iminooxadiazinedione and oxadiazinetrione structures in the polyisocyanate, wherein said component a2) also comprises - based on its total weight - at least 80 wt.% HDI, IPDI or a mixture of HDI and IPDI.

The amount of said isocyanate mixture and said polymer polyol mixture may be more than 50 wt.%, and most preferably more than 85 wt.%, based on the amount of the composition used for making the foam layer as 100 wt.%.

If articles with particular yellowing resistance are desired, it is preferred to limit the content of aromatic polyisocyanates in the reaction mixture used for making the foam layer to at most 10 wt.%, more preferably at most 5 wt.% and most preferably at most 2 wt.%.

Polymer polyol mixture

The hydroxyl group functionality of said polymer polyol mixture may be in a range of 2-4, and preferably in a range of 3-4.

The mass ratio of said first polyether polyol to said second polyether polyol is preferably in a range of 4: 1-30: 1.

First polyether polyol

The number average molecular weight of said first polyether polyol may be in a range of 4000-6000 g/mol.

The hydroxyl value of said first polyether polyol may be in a range of 20-80 mg KOH/g, and preferably in a range of 25-40 mg KOH/g.

The ethylene oxide content in said first polyether polyol is preferably in a range of 10-20 wt.%, based on the amount of the component for preparing said first polyether polyol as 100 wt.%.

The viscosity of said first polyether polyol is preferably in a range of 750-1500 mPa·s.

The hydroxyl group functionality of said first polyether polyol is preferably in a range of 2-4.

Said first polyether polyol is preferably one or more selected from the group consisting of: Arcol Polyol 3553, Acrol Polyol 1362 and Acrol polyol 1026.

Second polyether polyol

The number average molecular weight of said second polyether polyol may be in a range of 3000-6000 g/mol, and preferably in a range of 4000-5000 g/mol.

The hydroxyl value of said second polyether polyol may be in a range of 20-80 mg KOH/g, and preferably in a range of 25-40 mg KOH/g.

The ethylene oxide content in said second polyether polyol may be more than 65 wt.%, and most preferably more than 65 wt.% and less than 80 wt.%, based on the amount of the component for preparing said second polyether polyol as 100 wt.%.

The viscosity of said second polyether polyol is preferably in a range of 1000-1500 mPa·s.

The hydroxyl group functionality of said second polyether polyol may be in a range of 2-4, and preferably 3.

Said second polyether polyol is preferably Bayflex VP PU 191F03.

Optional third polyether polyol

Said third polyether polyol is different from said first polyether polyol and said second polyether polyol.

The number average molecular weight of said third polyether polyol may be in a range of 500-1000 g/mol.

The hydroxyl value of said third polyether polyol may be more than 200 mg KOH/g, and preferably in a range of 200-250 mg KOH/g.

The viscosity of said third polyether polyol is preferably in a range of 200-500 mPa·s.

The hydroxyl group functionality of said third polyether polyol may be in a range of 2-4, and preferably 3.

The amount of said third polyether polyol is preferably not more than 10 wt.%, based on the amount of said polymer polyol mixture as 100 wt.%.

Said third polyether polyol is preferably obtained by the polymerization of a component that comprises no ethylene oxide.

Said third polyether polyol is preferably Arcol Polyol 1071.

Optional fourth polyester polyol

Said fourth oligomeric polyester polyols having a hydroxyl number of 195 to 500 mg KOH/g and a number-average functionality of 2.

The amount of said fourth polyester polyol is preferably not more than 20 wt.%, based on the amount of said polymer polyol mixture as 100 wt.%.

Isocyanate-reactive group comprising compound having a number average molecular weight of 32-600 g/mol

The isocyanate-reactive group as used herein refers to a group capable of reacting with an isocyanate group.

Said isocyanate-reactive group comprising compound having a number average molecular weight of 32-600 g/mol is preferably an aliphatic and/or alicyclic compound.

Said isocyanate-reactive group is preferably one or more selected from the group consisting of: hydroxyl, primary amino and secondary amino.

Said isocyanate-reactive group comprising compound having a number average molecular weight of 32-600 g/mol and preferably comprises at least two isocyanate-reactive groups.

Said isocyanate-reactive group comprising compound having a number average molecular weight of 32-600 g/mol is most preferably one or more selected from the group consisting of: glycerol, 1,1,1-trimethylolethane, 1,1,1-trimethylolpropane, 1,2,3-trimethylolhexane, poly(propylene oxide-ethylene oxide), poly(propylene oxide), poly(ethylene oxide), monoethanolamine, diethanolamine, triethanolamine and 2-amino-2-methyl-1-propanol.

The amount of said isocyanate-reactive group comprising compound having a number average molecular weight of 32-600 g/mol may be in a range of 0.5-5.0 wt.%, and preferably in a range of 2-3 wt.%, based on the amount of said composition as 100 wt.%.

Catalyst

The amount of said catalyst may be in a range of 0.5-3.0 wt.%, and preferably in a range of 0.5-1.5 wt.%, based on the amount of said composition as 100 wt.%.

Said catalyst may be those commonly used in the industry, for example: (1) tertiary amines such as bis(2,2'-dimethylamino)ethyl ether, bis(dimethylaminoethyl)ether, N-methylmorpholine, N-ethylmorpholine, N,N-dimethylbenzylamine, N,N-dimethylethanolamine, N,N,N',N'-tetramethyl-1,3-butanediamine, pentamethyl dipropylenetriamine, trimethylamine, triethylamine, triethanolamine, triethylenediamine, and pyridine oxide; (2) compounds containing >N-C=N- structure such as diazabicycloalkenes or guanidine-based compounds; available compounds including 1,5-diazabicyclo-(4,3,0)-5-nonene, 1,8-diazabicyclo-(5,4,0)-7-undecene, 1,8-diazabicyclo-(5,3,0)-7-decene, 1,5-diazabicyclo-(5,4,0)-5-undecene, 1,4-diazabicyclo-(3,3,0)-4-octene, guanidine, 1,3-diphenylguanidine, 1,1,3,3-tetramethylguanidine, cyclohexyltetramethylguanidine, N-dodecyltetramethylguanidine, guanidinium thiocyanate, 1,3-di(tert-butyloxycarbonyl)guanidine, 1,3-di-tert-butyloxycarbonyl-2-(2-hydroxyethyl)guanidine, 1,3-di-tert-butyloxycarbonyl-2-(carbonylmethyl)guanidine, 1,8-di(tetramethylguanidino)naphthalene, 1-(2,2-diethoxyethyl)guanidine, 1-(4-methoxyphenyl)guanidine and organic salts of diazabicycloalkenes or guanidine-based compounds such as phenates, formates, acetates and carbonates; (3) strong bases such as alkali metal salts, alkaline earth metal alkoxides, hydroxides or phenates; (4) acidic metal salts of strong acids such as stannous chloride, ferric chloride, antimony trichloride, bismuth chloride and nitrates; (5) chelates of various metals, for example, those obtained from acetylacetone, benzoylacetone, trifluoroacetylacetone, ethyl acetoacetate, salicylaldehyde, cyclopentanone-2-carboxylate, acetylacetone-imine, diacetylacetone-alkylene diimine, and salicylaldehyde imine and various metals such as Be, Mg, Zn, Pb, Ti, Zr, Sn, Bi, Mo, Mn, Fe, C, and Ni; (6) alkoxides and phenates of various metals, such as $Ti(OR)_4$ and $Al(OR)_3$, wherein R is an alkyl or aryl group, and the reaction products of an alkoxide with a carboxylic acid, a $\beta$-diketone and a 2-(N,N-dialkylamino)alkanol, for example titanium chelates obtained via such or similar steps; (7) salts of organic acids with various metals such as alkali metals and alkaline earth metals, such as calcium hexanoate; (8) organometallic derivatives of trivalent and pentavalent As, Sb and Bi, and metal carbonyl compounds of iron and cobalt.

Said catalyst is preferably tin-based catalysts and/or base catalysts.
Said tin-based catalysts are preferably organotin catalysts and/or organic stannous catalysts.

Said organotin catalysts may be one or more selected from the group consisting of: dialkyltin salts of carboxylic acids, trialkyltin hydroxides, dialkyltin oxides, dialkoxydialkyltins and dithiol dial-kyltins.

Said organic stannous catalysts may be stannous salts of carboxylic acids, such as stannous acetate, stannous octoate, and stannous oleate.

Said tin-based catalysts are most preferably stannous isooctoate.

Said base catalysts may be salts of Brønsted acids and various alkali metals; and preferably sodium bicarbonate or sodium carbonate.

When said catalyst is a combination of tin-based catalysts and base catalysts, the amount of said tin-based catalysts is preferably in a range of 0.5-1.5 wt.% and the amount of said base catalysts is preferably in a range of 0.1-1.0 wt.%, based on the amount of said composition as 100 wt.%.

Foaming agent

Said foaming agent may be water, carbon dioxide (gas or liquid), aliphatic and/or cycloaliphatic hydrocarbons, as propane, butane, pentane or hexane etc.. Preferably water and/or carbon dioxide (gas or liquid) is used.

Said water reacts with said isocyanate mixture to produce carbon dioxide, resulting in flexible polyurethane foams having varying density ranges. When the water content in the composition is relatively high, more carbon dioxide can be produced and flexible polyurethane foams having a relatively low density can be obtained.

The amount of said foaming agent may be in a range of 0.3-5.0 wt.%, and preferably in a range of 0.5-2.5 wt.%, based on the amount of said composition as 100 wt.%.

Additive

For the production of polyurethane foams, other auxiliaries and/or additives may be added to the reaction mixture if necessary. These include surface-active substances, foam stabilizers, cell openers, cell regulators, viscosity reducers, fillers, as well as fungistatic, fungicidal, bacteriostatic, bactericidal, virustatic and virucidal substances.

The amount of said additive is preferably in a range of 0.5-1.5 wt.%, based on the amount of said composition as 100 wt.%.

Said additive may be one or more selected from the group consisting of: surfactants, pigments, antioxidants, UV light absorbers, UV light stabilizers, flame retardants, fillers, recycled foam powders, cell openers and antistatic agents.

Said surfactant may be one or more selected from the group consisting of: polysiloxane-polyalkylene oxide copolymers, silicon-free nonionic surfactants, cationic surfactants, anionic surfactants, and polymeric surfactants with a relative molecular weight of higher than 1,000 g/mol.

Said surfactant is preferably a siloxane-polyoxyalkylene copolymer. Suitable are also organopolysiloxanes.

Suitable surfactants are Niax silicone L-5309, L-3601, L-5307, L-3600, L5366, Y-10366 (all manufactured by Momentive, trade name), Tegostab BF2370, 8545, 8783-LF-2, 8715-LF-2 (all manufactured by Evonic Corporation, trade name). The preferred surfactants are Niax silicone Y-10366, Tegostab BF 2370.

The preferred surfactants are Niax silicone Y-10366, Tegostab BF 2370.

The amount of said surfactant is preferably in a range of 0,4 - 2 wt.% , based on the amount of said composition as 100 wt.%.

Said cell openers may be one or more selected from the group consisting of: paraffins, polybutadienes, fatty alcohols and optionally polyether-modified dimethylpolysiloxanes.

Although the flexible polyurethane foam of the present invention does not tend to discolor under the usual exposure of ultraviolet (UV) radiation, UV light stabilizers, UV light absorbers, or antioxidants may be added into said composition in order to improve the light stability of the foam.

Said UV light stabilizer is preferably a hindered amine UV light stabilizer.

Said hindered amine UV light stabilizer is preferably one or more selected from the group consisting of: di(2,2,6,6-tetramethylpiperidinyl)sebacate, poly[[6-[(1,1,3,3-tetramethylbutyl)amino]-s-triazine-2,4-diyl]-[(2,2,6,6-tetramethyl-4-piperidinyl)imino]-hexamethylene-[(2,2,6,6-tetramethyl-4-piperidinyl)imino]] (CAS No. 71878-19-8), di(1,2,2,6,6-pentamethyl-4-piperidinyl)-[[3,5-di(1,1-dimethylethyl)-4-hydroxyphenyl]methyl]butylmalonate, 4-benzoyloxy-2,2,6,6-tetramethylpiperidine, Bis(1,2,2,6,6-pentamethyl-4-piperidyl)sebacate (CAS No 41556-26-7) and methyl 1,2,2,6,6-pentamethyl-4-piperidyl sebacate (CAS No 82919-37-7)

Said UV light absorbers may be salicylates, benzotriazoles and benzophenones.

Said salicylates are preferably phenyl salicylate and/or tert-butylphenyl salicylate.

Said benzotriazoles are preferably one or more selected from the group consisting of: 2-(2'-hydroxy-3',5'-diisopentylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2-(2H-benzotriazol-2-yl)-4-methyl-6-dodecyl phenol, 2-(2H-benzotriazol-2-yl)-4,6-bis(1-methyl-1-phenylethyl) phenol and 2-(2'-hydroxy-3',5'-di-tert-butylphenyl) benzotriazole.

Said benzophenones are preferably one or more selected from the group consisting of: 2,2'-dihydroxy-4,4'-dimethoxybenzophenone, 2-hydroxy-4-n-octyloxybenzophenone, 2,2'-dihydroxy-4-methoxybenzophenone and 2-hydroxy-4-methoxybenzophenone.

Furthermore a combination of the aforementioned UV-stabilizer and antioxidants. A commercially available combination from e.g. BASF is Tinuvin B75. Such combination is a synergistic blend of 20 % Irganox 1135 + 40 % Tinuvin 571 + 40 % Tinuvin 765.

Said antioxidant can be a free-radical chain blocking agent and/or peroxide decomposer.

Said peroxide decomposer is preferably thioesters and/or phosphites.

The amount of said antioxidant or UV absorber is preferably in a range of 0.5-5 wt.%, based on the amount of said composition as 100 wt.%.

Said additive may be one or more selected from the group of antimicrobic and/ or antiviral agents.

The isocyanate index of said composition is preferably in a range of 70-120 more preferably 90-120, most preferably 95 -110.

**Claims**

1. A composite article comprising a textile layer and a foam layer disposed on the textile layer, **characterized in that** depending on the requirements, the foam layer comprises either a normally produced open cellular foam or a foam that has been recticulated after production in order to increase further the air flowability with a fluid connection between one major surface and another, opposing major surface of the foam layer; the textile layer and/or the foam layer comprise an antimicrobial agent and/or an antiviral agent and the foam layer comprises a foam which has been obtained by reacting a composition which comprises the following components:

a. an isocyanate mixture, comprising:

a1) an aliphatic and/or alicyclic and/or aromatic isocyanate monomer and/or an uretdione, based on an aliphatic and/or alicyclic and/or aromatic isocyanate monomer, and
a2) an oligomeric aliphatic and/or oligomeric alicyclic and/or oligomeric aromatic polyisocyanate,

wherein the mass ratio of said of said isocyanate monomers and/or uretdiones to said oligomeric polyisocyanates is
$\leq$ 200:1 in cases the isocyanate mixture comprises as component a1) aliphatic and/or alicyclic isocyanate monomers and/or uretdiones, based on aliphatic and/or alicyclic isocyanate monomers, and as component a2) oligomeric aliphatic and/or oligomeric alicyclic polyisocyanates,
$\geq$ 200:1 in cases the isocyanate mixture comprises as component a1) aromatic isocyanate monomers and/or uretdiones, based on aromatic isocyanate monomers, and as component a2) oligomeric aromatic polyisocyanates;
b. a polymer polyol mixture, comprising:

b1) a first polyether polyol having a number average molecular weight of not less than 3000 g/mol, wherein said first polyether polyol is obtained by the polymerization of a component comprising ethylene oxide, and said first polyether polyol has an ethylene oxide content of 5-20 wt.%, based on the amount of the component for preparing said first polyether polyol as 100 wt.%,
b2) a second polyether polyol having a number average molecular weight of not less than 3000 g/mol, wherein said second polyether polyol is obtained by the polymerization of a component comprising ethylene oxide, and said second polyether polyol has an ethylene oxide content of more than 60 wt.%, based on the amount of the component for preparing said second polyether polyol as 100 wt.%, and
b3). optionally, a third polyether polyol having a number average molecular weight of not less than 500 g/mol,

wherein the mass ratio of said first polyether polyol to said second polyether polyol is in a range of 4:1-100:1, and the amount of said third polyether polyol is not more than 20 wt.%, based on the amount of said polymer polyol mixture as 100 wt.%;

c. an isocyanate-reactive group comprising compound having a number average molecular weight of 32-600 g/mol;
d. a catalyst;
e. optionally, a foaming agent; and
f. optionally, an additive;

wherein the isocyanate index of said composition is in a range of 70-120.

2. The article according to claim 1, **characterized in that** the article is a breathing mask.

3. The article according to claim 1 or 2, **characterized in that** the textile layer comprises a non-woven textile.

4. The article according to any one of claims 1 to 3, **characterized in that** the foam layer has a thickness of $\geq$ 1 mm to $\leq$ 10 mm

5. The article according to any one of claims 1 to 4, **characterized in that** the antimicrobial agent and/or antiviral agent are selected from metallic silver, silver alloys, silver compounds, bonded copper nano particles, copper compounds, titanium dioxide, organometallic compounds or a mixture of at least two of the aforementioned agents.

6. The article according to any one of claims 1 to 5, **characterized in that** the textile layer and the foam layer are at least partially chemically, mechanically or thermally bonded to each other.

7. The article according to any one of claims 1 to 6, **characterized in that** the foam layer has an average pore size, of $\geq$ 150 $\mu$m to 1500 < $\mu$m.

8. The article according to any one of claims 1 to 7, **characterized in that** the foam layer has an air flow rate, determined according to DIN-EN-ISO 7231, of $\geq$ 40 L/min.

9. The article according to any one of claims 1 to 8, **characterized in that** the foam layer has a raw density, determined according to DIN EN ISO 845, of $\geq$ 20 kg/m$^3$ to $\leq$ 120 kg/m$^3$.

10. The article according to any one of claims 1 to 9, **characterized in that** the article further comprises a replaceable moisture-absorbent layer.

11. The article according to any one of claims 1 to 10, **characterized in that** in the composition from whose reaction the foam has been obtained the mass ratio of said isocyanate monomers and/or uretdiones to said oligomeric polyisocyanates is

200:1 - 1:500, preferably 20:1 - 1:120, more preferably 3:1 - 1:30 in cases the isocyanate mixture comprises as component a1) aliphatic and/or alicyclic isocyanate monomers and/or uretdiones, based on aliphatic and/or alicyclic isocyanate monomers, and as component a2) oligomeric aliphatic and/or oligomeric alicyclic polyisocyanates,

500:1 - 1:200, preferably 120:1 - 1:20, more preferably 30:1 - 1:3 in cases the isocyanate mixture comprises as component a1) aromatic isocyanate monomers and/or uretdiones, based on aromatic isocyanate monomers, and as component a2) oligomeric aromatic polyisocyanates.

12. The article according to any one of claims 1 to 11, **characterized in that** in the composition from whose reaction the foam has been obtained said monomer and/or uretdione is isophorone diisocyanate and/or dicyclohexylmethane diisocyanate.

13. The article according to any one of claims 1 to 12, **characterized in that** in the composition from whose reaction the foam has been obtained said oligomeric polyisocyanate is one or more trimer selected from the group consisting of: isophorone diisocyanate trimer, 1,5-cyclopentane diisocyanate trimer and hexamethylene diisocyanate trimer.

14. A method of manufacturing an article according to any one of claims 1 to 13, **characterized in that** a textile layer and a pre-fabricated foam layer are placed into a mold and thermoformed together.

15. A method of manufacturing an article according to any one of claims 1 to 13, **characterized in that** the composition as recited in any one of claims 1, 11, 12, or 13 is frothed into a foam and contacted with the textile layer under subsequent curing to obtain a foam layer bonded to the textile layer.

Europäisches
Patentamt

European
Patent Office

Office européen
des brevets

# EUROPEAN SEARCH REPORT

Application Number

EP 20 16 9347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/352445 A1 (ZHAO DONG BO [CN] ET AL) 21 November 2019 (2019-11-21)<br>* example 3; table 2 *<br>* paragraph [0150] - paragraph [0151]; claim 29 *<br>* paragraph [0122] *<br>----- | 1-15 | INV.<br>C08G18/79<br>C08G18/75<br>C08G18/78<br>A62B17/00<br>C08G18/72 |
| | | | TECHNICAL FIELDS SEARCHED (IPC)<br><br>C08G<br>A62C<br>A62B |

The present search report has been drawn up for all claims

| Place of search | Date of completion of the search | Examiner |
|---|---|---|
| Munich | 28 September 2020 | Ojea Jimenez, Isaac |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 16 9347

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2020

| Patent document cited in search report | | Publication date | Patent family member(s) | | Publication date |
|---|---|---|---|---|---|
| US 2019352445 | A1 | 21-11-2019 | TW | 201946944 A | 16-12-2019 |
| | | | US | 2019352445 A1 | 21-11-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3611203 A1
- EP 1721720 A1
- JP 2018016904 A

**Non-patent literature cited in the description**

- *CHEMICAL ABSTRACTS,* 71878-19-8
- *CHEMICAL ABSTRACTS,* 41556-26-7
- *CHEMICAL ABSTRACTS,* 82919-37-7